# EUROPÄISCHE PATENTSCHRIFT

(11) **EP 3 919 327 B1**
(45) Veröffentlichungstag und Bekanntmachung des Hinweises auf die Patenterteilung: **26.04.2023**
(21) Anmeldenummer: 21175046.8
(22) Anmeldetag: 20.05.2021
(51) Int. Cl.: B60R 11/04

(54) **KAMERAANORDNUNG**
CAMERA ASSEMBLY
AGENCEMENT DE CAMERA

(30) Priorität: 04.06.2020 DE 102020114910
(43) Veröffentlichungstag der Anmeldung: 08.12.2021
(73) Patentinhaber: Witte Automotive GmbH, 42551 Velbert (DE)
(72) Erfinder: Herdering, Markus, 44866 Bochum (DE); Mensch, Reinaldo, 42113 Wuppertal (DE)
(74) Vertreter: Manitz Finsterwald Patent- und Rechtsanwaltspartnerschaft mbB

(56) Entgegenhaltungen:
- EP-A1- 0 635 398
- EP-A1- 3 040 244
- WO-A1-2019/206572
- DE-A1-102013 001 721

## Beschreibung

Die vorliegende Erfindung betrifft eine Kameraanordnung, insbesondere für ein Fahrzeug, mit einer beweglich gelagerten Kameraeinheit, welche zwischen einer Passivposition und einer Aktivposition bewegbar ist.

Eine Kameraanordnung mit den Merkmalen des Oberbegriffs des Anspruchs 1 ist aus der DE 10 2013 001 721 A1 bekannt. Ferner offenbaren die EP 3 040 244 A1, EP 0 635 398 A1 und WO 2019/206572 A1 jeweils eine Kameraanordnung mit einer beweglich gelagerten Kameraeinheit.

Kameraanordnungen sind grundsätzlich bekannt und dienen beispielsweise zur optischen Erfassung eines Umgebungsbereichs eines Fahrzeugs. Zu diesem Zweck lässt sich die Kameraeinheit aus ihrer Passivposition, in welcher die Kameraeinheit vor äußeren Einflüssen in einem Gehäuse geschützt aufgenommen ist, in eine Aktivposition bewegen, um in der Aktivposition den Umgebungsbereich des Fahrzeugs zu erfassen. Insbesondere eignet sich eine Kameraanordnung der eingangs genannten Art als so genannte Rückfahrkamera, welche zur Erfassung eines Außenbereichs hinter dem Fahrzeug ausgestaltet ist. Der von der Kameraeinheit erfasste Umgebungsbereich kann beispielsweise auf einem Display im Armaturenbrett des Fahrzeugs dargestellt werden und erleichtert so das Manövrieren des Fahrzeugs in oder durch uneinsehbare Bereiche. Grundsätzlich könnte die Kameraanordnung aber auch andere Bereiche eines Kraftfahrzeugs erfassen. Insbesondere kann die die Kameraanordnung auch als Frontkamera zum Einsatz kommen, welche einen Bereich vor dem Fahrzeug erfasst.

Bekannte Kameraanordnungen dieser Art werden üblicherweise mittels eines Zahnradgetriebes zwischen der Passivposition und der Aktivposition bewegt, beispielsweise indem an der Kameraeinheit eine Zahnstange ausgebildet ist, welche mit einem antreibbaren Zahnrad zusammenwirkt. Aus Kosten- sowie Fertigungsgründen werden die Komponenten des Zahnradgetriebes mit verhältnismäßig großen Toleranzen zwischen den Komponenten gefertigt.

Sobald die Komponenten des Zahnradgetriebes zur Bewegung der Kameraeinheit angetrieben werden, führen besagte Fertigungstoleranzen zu unerwünschten Relativbewegungen zwischen den Komponenten des Zahnradgetriebes, wodurch letztlich eine als störend empfundene Geräuschentwicklung entsteht.

Eine Aufgabe der Erfindung besteht darin, eine Kameraanordnung mit einer zuverlässiger und leiser verfahrbaren Kameraeinheit zu schaffen.

Die Aufgabe wird gelöst durch eine Kameraanordnung mit den Merkmalen des Anspruchs 1.

Der Erfindung liegt der allgemeine Gedanke zugrunde, die Kameraeinheit anstatt durch ein Zahnradgetriebe durch ein Seilsystem und eine Seilwinde zu bewegen. Hieraus ergibt sich der Vorteil, dass bei einer Bewegung der Kameraeinheit aufgrund der flexiblen Ausgestaltung des Seilzuges weniger Körperschall entsteht als bei einem Zahnradgetriebe mit starren Komponenten, so dass sich die Kameraanordnung insgesamt leiser bewegen lässt.

Anders als bei einer bloßen Umlenkrolle übt die Seilwinde selbst eine Zugkraft auf die Kameraeinheit aus, nämlich über das Seilsystem, d.h. die Seilwinde verrichtet im Gegensatz zu einer Umlenkrolle Arbeit.

Eine Bewegung der Kameraeinheit zwischen der Passivposition und der Aktivposition bedeutet, dass die Kameraeinheit reversibel zwischen der Passivposition und der Aktivposition bewegbar ist. Mit anderen Worten ist die Kameraeinheit nicht lediglich einmalig aus der Passivposition in die Aktivposition bewegbar, sondern kann mehrfach zwischen den beiden Positionen bewegt werden.

Vorteilhafte Ausführungsformen sind den Unteransprüchen, der Beschreibung und den Zeichnungen zu entnehmen.

Das Seilsystem kann ein flexibles Seil aufweisen. Dabei umfasst ein flexibles Seil auch einen geflochtenen flexiblen Draht oder einen bandartigen Flachdraht, welcher wie eine Spiralfeder um die Seilwinde herumgewickelt sein kann. Grundsätzlich kann das Seilsystem jedes flexible Element umfassen, welches sich durch eine Verdrehung der Seilwinde auf die Seilwinde aufwickeln bzw. von dieser abwickeln lässt. Besonders bevorzugt wird ein Seil aus einem geflochtenen und/oder gezogenen Kunststoff verwendet.

Vorzugsweise ist die Kameraeinheit durch eine Verdrehung der Seilwinde in einer ersten Drehrichtung in die Aktivposition und durch eine Verdrehung der Seilwinde in einer entgegengesetzten zweiten Drehrichtung in die Passivposition bewegbar. Dabei kann mittels des Seilsystems sowohl durch eine Verdrehung der Seilwinde in der ersten Drehrichtung als auch durch eine Verdrehung der Seilwinde in der zweiten Drehrichtung eine Zugkraft auf die Kameraeinheit ausübbar sein. Es versteht sich, dass die auf die Kameraeinheit wirkende Zugkraft eine zumindest annähernd zur Bewegungsrichtung der Kameraeinheit parallel ausgerichtete Kraftkomponente aufweist.

Zur Befestigung des Seilsystems an der Kameraeinheit weist die Kameraeinheit einen ersten Befestigungspunkt und einen in Bewegungsrichtung der Kameraeinheit zu dem ersten Befestigungspunkt beabstandeten zweiten Befestigungspunkt auf.

Erfindungsgemäß umfasst das Seilsystem ein erstes Seil und ein zweites Seil.

Dabei ist das erste Seil mit seinem einen Ende an dem ersten Befestigungspunkt und mit seinem anderen Ende an der Seilwinde befestigt. Das zweite Seil ist dahingegen mit seinem einen Ende an dem zweiten Befestigungspunkt und mit seinem anderen Ende an der Seilwinde befestigt. Hierbei kann bei in der Aktivposition befindlicher Kameraeinheit das erste Seil auf die Seilwinde aufgewickelt sein, während das zweite Seil bevorzugt abgewickelt ist. Entsprechend kann bei in der Passivposition befindlicher Kameraeinheit das zweite Seil auf die Seilwinde aufgewickelt sein, während das erste Seil bevorzugt abgewickelt ist.

Zur reversiblen Bewegung der Kameraeinheit zwischen der Aktivposition und der Passivposition kann die Seilwinde bidirektional verdrehbar ausgebildet sein.

Ferner kann zur Verdrehung der Seilwinde ein Antrieb, insbesondere ein bidirektionaler Antrieb, vorgesehen sein. Der Antrieb kann verkapselt sein, um die Kameraanordnung noch leiser auszugestalten. Bevorzugt ist der Antrieb als ein selbsthemmender Antrieb ausgebildet, so dass keine zusätzlichen Bauteile benötigt werden, um die Kameraeinheit in einer gewünschten Position zu halten. Insbesondere kann der Antrieb die Seilwinde direkt antreiben, um einen Seilantrieb zu bilden. Bei einem Seilantrieb sind die Antriebsachse des Antriebs und die Drehachse der Seilwinde identisch. Der Vorteil einer derartigen Ausgestaltung besteht darin, dass zwischen dem Antrieb und der Seilwinde keine weiteren Bauteile, z.B. eines Schneckengetriebes oder eines Zahnradgetriebes, benötigt werden, wodurch die Kameraanordnung in ihrer Ausgestaltung insgesamt leiser und kostengünstiger ist.

Grundsätzlich kann die Seilwinde an einem Gehäuse der Kameraanordnung ortsfest gelagert sein. Für eine besonders platzsparende Ausgestaltung der Kameraanordnung kann die Seilwinde zusätzlich an der Kameraeinheit gelagert sein. Um hierbei eine Bewegung der Kameraeinheit relativ zu der ortsfesten Seilwinde zu ermöglichen, kann an der Kameraeinheit eine parallel zur Bewegungsrichtung der Kameraeinheit ausgerichtete Führungsnut ausgebildet sein, in welcher ein Lagerabschnitt einer die Drehachse der Seilwinde definierenden Welle der Seilwinde gelagert ist.

Damit die Kameraeinheit für eine optimale Erfassung des Fahrzeugumfeldes in der Aktivposition möglichst weit aus dem Gehäuse der Kameraanordnung herausragt, kann die die Führungsnut an einem Steg ausgebildet sein, welcher auf einer einem Objektiv der Kameraeinheit abgewandten Seite aus der Kameraeinheit hervorgeht.

Vorteilhafterweise vollführt die Kameraeinheit bei einer Bewegung zwischen der Passivposition und der Aktivposition eine Rotationsbewegung und/oder Translationsbewegung. Für eine gleichzeitige Rotations- und Translationsbewegung der Kameraeinheit ist es von Vorteil, wenn die Führungsnut gekrümmt ist. Insbesondere können dabei eine Krümmung der Seilwinde und eine Krümmung der Führungsnut entgegengesetzt sein. Zusätzlich oder alternativ kann Führungsnut einen größeren Krümmungsradius aufweisen als die Seilwinde.

Vorzugsweise ist die Kameraeinheit in der Passivposition von außen unzugänglich in einem Gehäuse der Kameraeinheit geschützt untergebracht, insbesondere hinter einem z.B. aufklappbaren Schutzelement bzw. einer aufklappbaren Abdeckung.

Gemäß einer weiteren Ausführungsform kann mindestens ein Federelement vorgesehen sein, entgegen dessen Rückstellkraft die Kameraeinheit in die Aktivposition oder Passivposition bewegbar ist. Auf diese Weise kann das Federelement für eine Rückstellung der Kameraeinheit in die Passivposition sorgen oder diese bei einer Bewegung in die Passivposition unterstützen. Es ist grundsätzlich aber auch denkbar, dass die Kameraeinheit bei einer Verdrehung der Seilwinde in der zweiten Drehrichtung entgegen der Rückstellkraft des Federelements bewegbar ist, so dass die Kameraeinheit durch die Rückstellkraft des Federelements aus der Passivposition in die Aktivposition bewegbar ist.

Bei der Bewegung der Kameraeinheit entgegen der Rückstellkraft eines Federelements ist es von Vorteil, wenn ein Antrieb zum Antreiben der Seilwinde ein nicht selbsthemmendes Getriebe aufweist, so dass das Getriebe des Antriebs bei einer durch die Federkraft induzierten Bewegung der Kameraeinheit freilaufen kann.

Nachfolgend wird die Erfindung anhand einer rein beispielhaften Ausführungsform unter Bezugnahme auf die beigefügten Zeichnungen beschrieben. Es zeigen:
- Fig. 1: eine perspektivische Teilschnittdarstellung einer Kameraanordnung mit in Passivposition befindlicher Kameraeinheit;
- Fig. 2: die Kameraanordnung von Fig. 1 mit in Aktivposition befindlicher Kameraeinheit;
- Fig. 3: eine Detailansicht der Kameraanordnung von Fig. 1 mit in Passivposition befindlicher Kameraeinheit;
- Fig. 4: eine Detailansicht der Kameraanordnung von Fig. 1 mit in einer Zwischenposition zwischen Aktivposition und Passiv-position befindlicher Kameraeinheit; und
- Fig. 5: eine Detailansicht der Kameraanordnung von Fig. 1 mit in Aktivposition befindlicher Kameraeinheit.

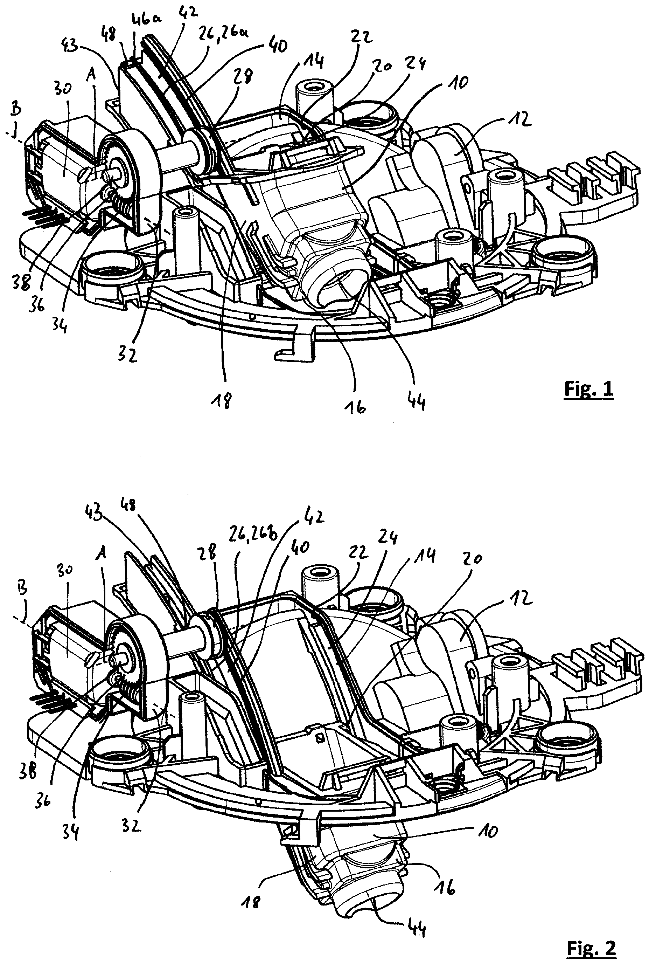

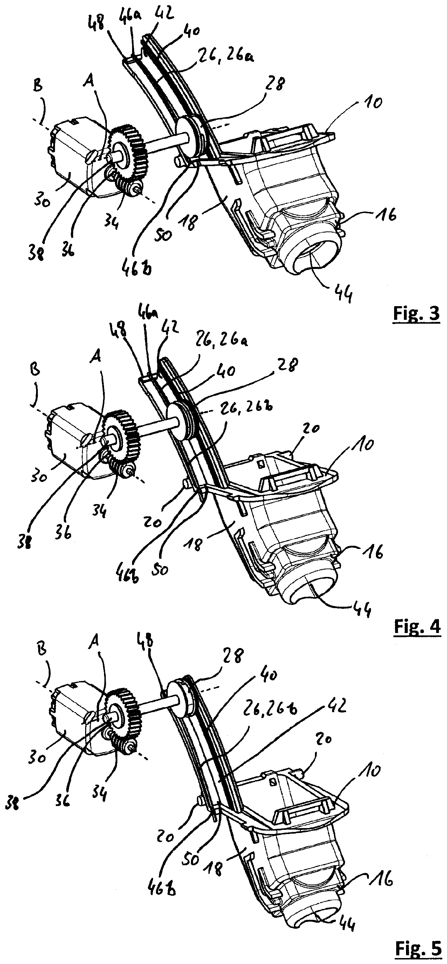

Die Figuren zeigen eine Kameraanordnung 10, welche zur Erfassung eines Umgebungsbereichs eines Fahrzeugs dient und welche beispielsweise als Rückfahrkamera ausgebildet ist. Fig. 1 und 2 geben eine Übersicht über die Kameraanordnung, wohingegen Fig. 3 bis 5 Details der Kameraanordnung 10 zeigen.

Die in Fig. 1 und 2 dargestellte Kameraanordnung 10 umfasst ein Gehäuse 12 mit einem Schacht 14, in welchem eine zwischen einer Passivposition (Fig. 1 und 3) und einer Aktivposition (Fig. 2 und 5) bewegbare Kameraeinheit 16 beweglich gelagert ist. In der Passivposition befindet sich die Kameraeinheit 16 in dem Schacht 14 und wird von einer in den Figuren nicht dargestellten aufklappbaren Abdeckung vor äußeren Einflüssen, wie z.B. Witterung oder Verunreinigungen, geschützt. In der Aktivposition ist die Kameraeinheit 16 zur Erfassung der Fahrzeugumgebung zumindest teilweise aus dem Schacht 14 herausbewegt, wobei die Abdeckung die in der Aktivposition befindliche Kameraeinheit 16 nicht mehr verdeckt.

Die Kameraeinheit 16 erstreckt sich im Wesentlichen längs ihrer Bewegungsrichtung und weist an gegenüberliegenden Längsseiten 18 Führungselemente 20 auf, welche bei einer Bewegung der Kameraeinheit 16 in jeweils an Seitenwänden 22 des Schachts 14 ausgebildeten Führungsbahnen 24 geführt sind.

Um die Kameraeinheit 16 zwischen der Aktivposition und der Passivposition zu bewegen, ist an der Kameraeinheit 16 ein Seilsystem 26 befestigt, welches mit einer um eine Drehachse A verdrehbaren Seilwinde 28 in Wirkverbindung steht. Dabei ist die Seilwinde 28 bidirektional verdrehbar, um eine reversible Bewegung der Kameraeinheit 16 zwischen der Aktivposition und der Passivposition zu ermöglichen.

Zur Verdrehung der Seilwinde 28 ist ein Antrieb 30 vorgesehen, welcher in dem dargestellten Ausführungsbeispiel für eine bidirektionale Verdrehung der Seilwinde 28 als bidirektionaler Antrieb 30 ausgestaltet ist. Zur Geräuschminimierung ist der Antrieb 30 in einer Verkapselung 32 untergebracht. In den Fig. 1 und 2 ist die Verkapselung 32 für eine bessere Darstellbarkeit des Antriebs 30 teilweise aufgeschnitten wiedergegeben.

Wie anhand von Fig. 1 und 2 zu erkennen ist, umfasst der Antrieb 30 ein Schneckengetriebe mit einem Schneckengewinde 34, welches über ein Zahnrad 36 mit der Seilwinde 28 in Wirkverbindung steht. Eine das Schneckengewinde 34 aufweisende Antriebsachse B ist dabei zumindest annähernd senkrecht zur Drehachse A der Seilwinde 28 ausgerichtet. In diesem Zusammenhang sei erwähnt, dass die Drehachse A der Seilwinde 28 ihrerseits zumindest annähernd senkrecht zur Bewegungsrichtung der Kameraeinheit 16 ausgerichtet ist.

Grundsätzlich könnte der Antrieb 30 die Seilwinde 28 auch direkt antreiben, d.h. ohne ein zwischengeschaltetes Schneckengetriebe. Dabei sind die Antriebsachse B des Antriebs 30 und die Drehachse A der Seilwinde 28 identisch, so dass der Antrieb 30 und die Seilwinde 28 gemeinsam einen Seilantrieb ausbilden. Da bei einem derartigen Seilantrieb kein toleranzbehaftetes Schneckengetriebe benötigt wird, lässt sich die Kameraanordnung 10 insgesamt leiser und kostengünstiger ausgestalten.

Vorzugsweise ist der Antrieb 30 als ein selbsthemmender Antrieb 30 ausgebildet, wodurch die Kameraeinheit 16 in einer gewünschten Position gehalten werden kann.

Die Seilwinde 28 ist sowohl antriebsseitig als auch auf einer dem Antrieb 30 abgewandten Seite der Seilwinde 28 gelagert. Auf der dem Antrieb 30 abgewandten Seite der Seilwinde 28 ist ein in den Figuren nicht erkennbarer Lagerabschnitt einer die Drehachse A der Seilwinde 28 definierenden Welle 38 der Seilwinde 28 in einer Führungsnut 40 gelagert. Die Führungsnut 40 verläuft parallel zur Bewegungsrichtung der Kameraeinheit 16 und ist an einem Steg 42 ausgebildet, welcher auf einer einem Objektiv 44 der Kameraeinheit 16 abgewandten Seite aus der Kameraeinheit 16 hervorgeht und welcher in einer an dem Gehäuse 12 ausgebildeten Führungsbahn 43 geführt ist. Wie anhand von Fig. 1 bis 5 erkennbar ist, geht der Steg 42 seitlich von einer dem Antrieb 30 zugewandten Längsseite 18 der Kameraeinheit 16 aus der Kameraeinheit 16 hervor. Grundsätzlich könnte die Führungsnut 40 aber auch direkt an der dem Antrieb 30 zugewandten Längsseite 18 der Kameraeinheit 16 ausgebildet sein.

Der Steg 42 sowie die Führungsnut 40 sind gekrümmt, damit die Kameraeinheit 16 bei einer Bewegung zwischen der Passivposition und der Aktivposition sowohl eine Translationsbewegung als auch eine Rotationsbewegung um eine in den Figuren nicht gezeigte Rotationsachse vollführt. Dabei ist die Rotationsachse zumindest annähernd senkrecht zur Translationsrichtung ausgerichtet, welche wiederum zumindest annähernd parallel zur Bewegungsrichtung der Kameraeinheit 16 ausgerichtet ist. Grundsätzlich kann die Kameraeinheit 16 bei ihrer Bewegung zwischen der Passivposition und der Aktivposition aber auch eine reine Translationsbewegung oder eine reine Rotationsbewegung vollführen. Bei einer reinen Translationsbewegung kann die Führungsnut 40 bzw. der Steg 42 gerade ausgebildet sein. Dahingegen kann die Führungsnut 40 bzw. der Steg 42 bei einer reinen Rotationsbewegung der Kameraeinheit 16 um die Rotationsachse herum gekrümmt sein.

Wie besonders anhand der Fig. 3 bis 5 ersichtlich ist, sind eine Krümmung der Seilwinde 28 und eine Krümmung der Führungsnut 40 bzw. des Steges 42 entgegengesetzt. Außerdem weist die Führungsnut 40 bzw. der Steg 42 einen größeren Krümmungsradius auf als die Seilwinde 28.

In dem vorliegenden Ausführungsbeispiel umfasst das Seilsystem 26 ein erstes Seil 26a und ein zweites Seil 26b. Das erste Seil 26a sowie das zweite Seil 26b können aus einem geflochtenen und/oder gezogenen Kunststoff gefertigt sein.

Das erste Seil 26a ist mit seinem einen Ende an einem ersten Befestigungspunkt 46a an der Kameraeinheit 16 und mit seinem anderen Ende an der Seilwinde 28 befestigt (Fig. 3 und 4). In vergleichbarer Weise ist das zweite Seil 26b mit seinem einen Ende an einem zu dem ersten Befestigungspunkt 46a in Bewegungsrichtung der Kameraeinheit 16 beabstandeten zweiten Befestigungspunkt 46b an der Kameraeinheit 16 und mit seinem anderen Ende an der Seilwinde 28 befestigt (Fig. 4 und 5). Sowohl der erste Befestigungspunkt 46a als auch der zweite Befestigungspunkt 46b sind an dem Steg 42 vorgesehen, wobei sich der erste Befestigungspunkt 46a an einem dem Objektiv 44 abgewandten Ende 48 des Stegs 42 und der zweite Befestigungspunkt 46b an einem Ursprung 50 des Stegs 42 befinden.

Gemäß einer in den Figuren nicht dargestellten, nicht erfindungsgemäßen Ausführungsform der Kameraanordnung 10 kann das Seilsystem 26 auch nur ein Seil umfassen. Dabei ist das eine Ende des Seils an dem ersten Befestigungspunkt 46a und das andere Ende des Seils an dem zweiten Befestigungspunkt 46b befestigt. Das Seil kann aus einem geflochtenen und/oder gezogenen Kunststoff gefertigt sein.

Bevorzugt ist das Seil reib- und/oder kraftschlüssig um die Seilwinde 28 herum gewickelt. Zusätzlich oder alternativ kann das Seil auch formschlüssig um die Seilwinde 28 herum gewickelt sein. Zu diesem Zweck kann die Seilwinde 28 mindestens eine, insbesondere spiralartige, Nut aufweisen, in welche das aufgewickelte Seil formschlüssig aufgenommen ist.

Ferner ist gemäß einer ebenfalls nicht dargestellten weiteren Ausführungsform der Kameraanordnung 10 denkbar, dass mindestens ein Federelement vorgesehen ist, entgegen dessen Rückstellkraft bei einer Verdrehung der Seilwinde 28 in einer ersten Drehrichtung eine Zugkraft mittels des Seilsystems 26 auf die Kameraeinheit 16 ausgeübt wird. Auf diese Weise kann die Kameraeinheit 16 infolge der Verdrehung der Seilwinde 28 in der ersten Drehrichtung in eine erste Bewegungsrichtung bewegt und durch die Rückstellkraft des Federelements in eine zu der ersten Bewegungsrichtung entgegengesetzte zweite Bewegungsrichtung zurückbewegt werden.

Nachfolgend wird nun die Funktionsweise der Kameraanordnung 10 mit Bezug auf die in den Figuren dargestellte erste Ausführungsform beschrieben.

Durch ein Steuersignal wird der Antrieb 30 aktiviert und die Seilwinde 28 über das Schneckengetriebe verdreht. Je nach Drehrichtung der Seilwinde 28 wird eines der beiden Seile 26a, 26b auf die Seilwinde 28 aufgewickelt, wodurch eine Zugkraft auf das entsprechende Seil 26a, 26b wirkt und sich ein Abstand zwischen der Seilwinde 28 und dem jeweiligen Befestigungspunkt 46a, 46b verringert, d.h. der jeweilige Befestigungspunkt 46a, 46b wird in Richtung der Seilwinde 28 bewegt. Konkret wird die Kameraeinheit 16 hierdurch in einer ersten Drehrichtung der Seilwinde 28 in die Aktivposition und in einer entgegengesetzten zweiten Drehrichtung der Seilwinde 28 in die Passivposition gebracht. In dem dargestellten Ausführungsbeispiel wird die Seilwinde 28 in der ersten Drehrichtung mit Blick in Richtung der Führungsnut 40 im Uhrzeigersinn verdreht. Entsprechend wird die Seilwinde 28 in der zweite Drehrichtung mit Blick in Richtung der Führungsnut 40 im Gegenuhrzeigersinn verdreht.

Anhand von Fig. 1 und 3 ist ersichtlich, dass bei in Passivposition befindlicher Kameraeinheit 16 das zweite Seil 26b auf die Seilwinde 28 aufgewickelt ist. Dahingegen ist das erste Seil 26a von der Seilwinde 28 abgewickelt. Aus Fig. 2 und 5 geht hervor, dass bei in Aktivposition befindlicher Kameraeinheit 16 das erste Seil 26a auf die Seilwinde 28 aufgewickelt und das zweite Seil 26b abgewickelt ist. Befindet sich die Kameraeinheit 16 in einer Zwischenposition zwischen der Aktivposition und der Passivposition, so sind beide Seile 26a, 26b teilweise auf die Seilwinde 28 aufgewickelt und teilweise abgewickelt (Fig. 4).

Bei der Kameraanordnung 10 gemäß der zweiten Ausführungsform ist bei in der Aktivposition befindlicher Kameraeinheit 16 ein sich zwischen dem ersten Befestigungspunkt 46a und der Seilwinde 28 erstreckender erster Seilabschnitt des Seils länger als ein sich zwischen dem zweiten Befestigungspunkt 46b und der Seilwinde 28 erstreckender zweiter Seilabschnitt des Seils. Überdies ist bei in der Passivposition befindlicher Kameraeinheit 16 der erste Seilabschnitt des Seils kürzer als der zweite Seilabschnitt.

### Bezugszeichenliste

- 10: Kameraanordnung
- 12: Gehäuse
- 14: Schacht
- 16: Kameraeinheit
- 18: Längsseite
- 20: Führungselement
- 22: Seitenwand
- 24: Führungsbahn
- 26: Seilsystem
- 26a, 26b: erstes Seil, zweites Seil
- 28: Seilwinde
- 30: Antrieb
- 32: Verkapslung
- 34: Schneckengewinde
- 36: Zahnrad
- 38: Welle
- 40: Führungsnut
- 42: Steg
- 43: Führungsbahn
- 44: Objektiv
- 46a, 46b: erster Befestigungspunkt, zweiter Befestigungspunkt
- 48: abgewandtes Ende
- 50: Ursprung

- A: Drehachse
- B: Antriebsachse

## Patentansprüche

1. Kameraanordnung (10), insbesondere für ein Fahrzeug, mit einer beweglich gelagerten Kameraeinheit (16), welche zwischen einer Passivposition und einer Aktivposition bewegbar ist, und
einem an der Kameraeinheit (16) befestigten Seilsystem (26), welches mit einer um eine Drehachse (A) verdrehbaren Seilwinde (28) in Wirkverbindung steht,
**dadurch gekennzeichnet, dass**
das Seilsystem (26) ein erstes Seil (26a) und ein zweites Seil (26b) umfasst und die Kameraeinheit (16) einen ersten Befestigungspunkt (46a) und einen in Bewegungsrichtung der Kameraeinheit (16) zu dem ersten Befestigungspunkt (46a) beabstandeten zweiten Befestigungspunkt (46b) für das Seilsystem (26) aufweist, wobei das erste Seil (26a) mit seinem einen Ende an dem ersten Befestigungspunkt (46a) und mit seinem anderen Ende an der Seilwinde (28) befestigt ist und das zweites Seil (26b) mit seinem einen Ende an dem zweiten Befestigungspunkt (46b) und mit seinem anderen Ende an der Seilwinde (28) befestigt ist.

2. Kameraanordnung (10) nach Anspruch 1,
**dadurch gekennzeichnet,**
**dass** die Kameraeinheit (16) durch eine Verdrehung der Seilwinde (28) in einer ersten Drehrichtung in die Aktivposition und durch eine Verdrehung der Seilwinde (28) in einer entgegengesetzten zweiten Drehrichtung in die Passivposition bewegbar ist.

3. Kameraanordnung (10) nach Anspruch 2,
**dadurch gekennzeichnet,**
**dass** mittels des Seilsystems (26) sowohl durch eine Verdrehung der Seilwinde (28) in der ersten Drehrichtung als auch durch eine Verdrehung der Seilwinde (28) in der zweiten Drehrichtung eine Zugkraft auf die Kameraeinheit (16) ausübbar ist.

4. Kameraanordnung (10) nach zumindest einem der vorstehenden Ansprüche,
**dadurch gekennzeichnet,**
**dass** bei in der Aktivposition befindlicher Kameraeinheit (16) das erste Seil (26a) auf die Seilwinde (28) aufgewickelt ist und
bei in der Passivposition befindlicher Kameraeinheit (16) das zweite Seil (26b) auf die Seilwinde (28) aufgewickelt ist.

5. Kameraanordnung (10) nach zumindest einem der vorstehenden Ansprüche,
**dadurch gekennzeichnet,**
**dass** die Seilwinde (28) bidirektional verdrehbar ist.

6. Kameraanordnung (10) nach zumindest einem der vorstehenden Ansprüche,
**dadurch gekennzeichnet,**
**dass** ein Antrieb (30), insbesondere bidirektionaler Antrieb (30), zur Verdrehung der Seilwinde (28) vorgesehen ist.

7. Kameraanordnung (10) nach zumindest einem der vorstehenden Ansprüche,
**dadurch gekennzeichnet,**
**dass** an der Kameraeinheit (16) eine parallel zur Bewegungsrichtung der Kameraeinheit (16) ausgerichtete Führungsnut (40) ausgebildet ist, in welcher ein Lagerabschnitt einer die Drehachse (A) der Seilwinde (28) definierenden Welle (38) der Seilwinde (28) gelagert ist.

8. Kameraanordnung (10) nach Anspruch 7,
**dadurch gekennzeichnet,**
**dass** die Führungsnut (40) gekrümmt ist, insbesondere wobei eine Krümmung der Seilwinde (28) und eine Krümmung der Führungsnut (40) entgegengesetzt sind und/oder wobei die Führungsnut (40) einen größeren Krümmungsradius aufweist als die Seilwinde (28).

9. Kameraanordnung (10) nach Anspruch 7 oder 8,
**dadurch gekennzeichnet,**
**dass** die Führungsnut (40) an einem Steg (42) ausgebildet ist, welcher auf einer einem Objektiv (44) der Kameraeinheit (16) abgewandten Seite aus der Kameraeinheit (16) hervorgeht.

10. Kameraanordnung (10) nach zumindest einem der vorstehenden Ansprüche,
**dadurch gekennzeichnet,**
**dass** mindestens ein Federelement vorgesehen ist, entgegen dessen Rückstellkraft die Kameraeinheit (16) in die Aktivposition oder Passivposition bewegbar ist.

## Claims

1. A camera arrangement (10), in particular for a vehicle, having a movably mounted camera unit (16) which can be moved between a passive position and an active position, and
a cable system (26) which is attached to the camera unit (16) and which is in operative connection with a cable winch (28) which can be rotated about an axis of rotation (A),
**characterized in that**
the cable system (26) comprises a first cable (26a) and a second cable (26b) and the camera unit (16) has a first attachment point (46a) and a second attachment point (46b) for the cable system (26), the second attachment point (46b) being spaced apart from the first attachment point (46a) in the direction of movement of the camera unit (16), with the first cable (26a) being attached at its one end to the first attachment point (46a) and at its other end to the cable winch (28) and the second cable (26b) being attached at its one end to the second attachment point (46b) and at its other end to the cable winch (28).

2. A camera arrangement (10) in accordance with claim 1,
**characterized in that**
the camera unit (16) can be moved into the active position by rotating the cable winch (28) in a first direction of rotation, and into the passive position by rotating the cable winch (28) in an opposite, second direction of rotation.

3. A camera arrangement (10) in accordance with claim 2,
**characterized in that**,
by means of the cable system (26), a tensile force can be exerted on the camera unit (16) both by rotating the cable winch (28) in the first direction of rotation and by rotating the cable winch (28) in the second direction of rotation.

4. A camera arrangement (10) in accordance with at least one of the preceding claims,
**characterized in that**,
when the camera unit (16) is in the active position, the first cable (26a) is wound onto the cable winch (28) and,
when the camera unit (16) is in the passive position, the second cable (26b) is wound onto the cable winch (28).

5. A camera arrangement (10) in accordance with at least one of the preceding claims,
**characterized in that**
the cable winch (28) can be rotated bidirectionally.

6. A camera arrangement (10) in accordance with at least one of the preceding claims,
**characterized in that**
a drive (30), in particular a bidirectional drive (30), is provided for rotating the cable winch (28).

7. A camera arrangement (10) in accordance with at least one of the preceding claims,
**characterized in that**
a guide groove (40) aligned parallel to the direction of movement of the camera unit (16) is formed on the camera unit (16), in which guide groove (40) a bearing portion of a shaft (38) of the cable winch (28) defining the axis of rotation (A) of the cable winch (28) is mounted.

8. A camera arrangement (10) in accordance with claim 7,
**characterized in that**
the guide groove (40) is curved, in particular with a curvature of the cable winch (28) and a curvature of the guide groove (40) being opposite to each other, and/or with the guide groove (40) having a larger radius of curvature than the cable winch (28).

9. A camera arrangement (10) in accordance with claim 7 or claim 8,
**characterized in that**
the guide groove (40) is formed on a web (42) which emerges from the camera unit (16) on a side remote from a lens (44) of the camera unit (16).

10. A camera arrangement (10) in accordance with at least one of the preceding claims,
**characterized in that**
at least one spring element is provided against whose restoring force the camera unit (16) can be moved into the active position or the passive position.

## Revendications

1. Ensemble caméra (10), en particulier pour un véhicule, comportant une unité de caméra (16) montée de manière mobile, qui peut être déplacée entre une position passive et une position active, et
un système de câble (26) fixé à l'unité de caméra (16), qui est en liaison active avec un treuil à câble (28) pouvant tourner autour d'un axe de rotation (A),
**caractérisé en ce que**
le système de câble (26) comprend un premier câble (26a) et un deuxième câble (26b), et l'unité de caméra (16) présente un premier point de fixation (46a) et un deuxième point de fixation (46b) pour le système de câble (26), espacé du premier point de fixation (46a) dans la direction de déplacement de l'unité de caméra (16), le premier câble (26a) étant fixé par l'une de ses extrémités au premier point de fixation (46a) et par son autre extrémité au treuil à câble (28), et le deuxième câble (26b) étant fixé par l'une de ses extrémités au deuxième point de fixation (46b) et par son autre extrémité au treuil à câble (28).

2. Ensemble caméra (10) selon la revendication 1,
**caractérisé en ce que**
l'unité de caméra (16) peut être déplacée jusque dans la position active par une rotation du treuil à câble (28) dans un premier sens de rotation, et jusque dans la position passive par une rotation du treuil à câble (28) dans un deuxième sens de rotation opposé.

3. Ensemble caméra (10) selon la revendication 2,
**caractérisé en ce que**
une force de traction peut être exercée sur l'unité de caméra (16) au moyen du système de câble (26) aussi bien par une rotation du treuil à câble (28) dans le premier sens de rotation que par une rotation du treuil à câble (28) dans le deuxième sens de rotation.

4. Ensemble caméra (10) selon l'une au moins des revendications précédentes,
**caractérisé en ce que**
lorsque l'unité de caméra (16) est en position active, le premier câble (26a) est enroulé sur le treuil à câble (28), et
lorsque l'unité de caméra (16) est en position passive, le deuxième câble (26b) est enroulé sur le treuil à câble (28).

5. Ensemble caméra (10) selon l'une au moins des revendications précédentes,
**caractérisé en ce que**
le treuil à câble (28) peut être tourné de manière bidirectionnelle.

6. Ensemble caméra (10) selon l'une au moins des revendications précédentes,
**caractérisé en ce que**
il est prévu un entraînement (30), en particulier un entraînement bidirectionnel (30), pour faire tourner le treuil à câble (28).

7. Ensemble caméra (10) selon l'une au moins des revendications précédentes,
**caractérisé en ce que**
une rainure de guidage (40) orientée parallèlement à la direction de déplacement de l'unité de caméra (16) est ménagée sur l'unité de caméra (16), rainure dans laquelle est logée une portion de palier d'un arbre (38) du treuil à câble (28) définissant l'axe de rotation (A) du treuil à câble (28).

8. Ensemble caméra (10) selon la revendication 7,
**caractérisé en ce que**
la rainure de guidage (40) est courbée, en particulier une courbure du treuil à câble (28) et une courbure de la rainure de guidage (40) étant opposées l'une à l'autre, et/ou la rainure de guidage (40) présentant un rayon de courbure supérieur à celui du treuil à câble (28).

9. Ensemble caméra (10) selon la revendication 7 ou 8,
**caractérisé en ce que**
la rainure de guidage (40) est ménagée sur une barrette (42) qui émerge de l'unité de caméra (16) sur un côté détourné un objectif (44) de l'unité de caméra (16).

10. Ensemble caméra (10) selon l'une au moins des revendications précédentes,
**caractérisé en ce que**
il est prévu au moins un élément à ressort contre la force de rappel duquel l'unité de caméra (16) peut être déplacée jusque dans la position active ou dans la position passive.
